# EUROPEAN PATENT APPLICATION

(11) **EP 4 741 322 A1**
(43) Date of publication of application: **13.05.2026**
(21) Application number: 25210883.2
(22) Date of filing: 23.10.2025
(51) Int. Cl.: B65G 43/08, B65G 47/244

(54) **CONVEYANCE APPARATUS**

(30) Priority: 07.11.2024 JP 2024195382
(71) Applicant: Ishida Co., Ltd., Kyoto-shi Kyoto 606-8392 (JP)
(72) Inventor: SATA, Kohei, Ritto-shi, Shiga, 520-3026 (JP); OKAMOTO, Yuji, Ritto-shi, Shiga, 520-3026 (JP); HOJO, Masaaki, Ritto-shi, Shiga, 520-3026 (JP); YOKOTA, Yuji, Ritto-shi, Shiga, 520-3026 (JP)
(74) Representative: Kalhor-Witzel, Ronak

(57) **Abstract**

A conveyance apparatus includes: a conveyance unit having a conveyance surface configured to convey an article; a posture changing unit provided on one side portion of the conveyance unit, configured to be switchable in advancing-retracting positions of the posture changing unit between a first state in which the posture changing unit is advanced toward an other side portion of the conveyance unit and a second state in which the posture changing unit is retracted toward the one side portion from the first state, and configured to change at least one of a position or a posture of the article being conveyed by interference with the article; a detection unit provided upstream of the posture changing unit in a conveyance direction of the article, and configured to detect at least one of a position or a posture of the article along a direction intersecting the conveyance direction; and a control unit configured to control the advancing-retracting position of the posture changing unit between the first state and the second state, wherein the control unit determines whether to cause the article and the posture changing unit to interfere with each other based on at least one of the position and the posture detected by the detection unit, and controls the advancing-retracting position of the posture changing unit according to a result of the determination.

## Description

### TECHNICAL FIELD

The present disclosure relates to a conveyance apparatus.

### BACKGROUND

Japanese Unexamined Patent Publication No. 2013-39993 describes a conveyance apparatus including a conveyor having a horizontal conveyance surface, a posture switching member that is switchable between a first state of protruding to interfere with a front part in the conveyance direction of an article moving on the horizontal conveyance surface and a second state of being retracted from the conveyance path of the article, a guide member that guides the article along the conveyance direction upstream of the posture switching member, and a control unit that controls a switching operation of the posture switching member between the first state and the second state.

In the above-described related art conveyance apparatus, the posture switching member is caused to protrude into the first state and interfere with the article supplied from an upstream apparatus, thereby rotating the article to change its orientation.

However, a conveyance state of the article supplied from the upstream apparatus may vary, such as at various angles with respect to the conveyance direction or at various positions in a direction intersecting the conveyance direction. Therefore, there is room for improvement in controlling the posture of the conveyed article.

The present disclosure provides a conveyance apparatus that can control the posture of a conveyed article in a more suitable manner in response to the conveyance state of the article.

### SUMMARY

(1) A conveyance apparatus according to one aspect of the present disclosure includes: a conveyance unit having a conveyance surface configured to convey an article; a posture changing unit provided on one side portion of the conveyance unit, configured to be switchable in advancing-retracting positions between a first state in which the posture changing unit is advanced toward an other side portion of the conveyance unit and a second state in which the posture changing unit is retracted toward the one side portion from the first state, and configured to change at least one of a position or a posture of the article being conveyed by interference with the article; a detection unit provided upstream of the posture changing unit in a conveyance direction of the article, and configured to detect at least one of a position or a posture of the article along a direction intersecting the conveyance direction; and a control unit configured to control the advancing-retracting position of the posture changing unit between the first state and the second state. The control unit determines whether to cause the article and the posture changing unit to interfere with each other based on at least one of the position and the posture detected by the detection unit, and controls the advancing-retracting position of the posture changing unit according to a result of the determination.

In the conveyance apparatus according to one aspect of the present disclosure, the detection unit detects at least one of a position or a posture of the article along the direction intersecting the conveyance direction. Based on at least one of the position or the posture detected by the detection unit, the control unit determines whether to cause the article and the posture changing unit to interfere with each other, and controls the advancing-retracting position of the posture changing unit in response to the result of the determination. In this way, the advancing-retracting position of the posture changing unit is controlled by considering at least one of the position or the posture of the article along the direction intersecting the conveyance direction as the conveyance state of the article. Thus, the control unit can control the advancing-retracting position of the posture changing unit in a more suitable manner in response to the conveyance state of the article, as compared to, for example, a configuration that does not consider the position and posture of the article. Therefore, according to the conveyance apparatus of one aspect of the present disclosure, the posture of the conveyed article can be controlled in a more suitable manner in response to the conveyance state of the article.

(2) In (1) above, a shape of the article may be a rectangular-like shape having a long side and a short side in a plan view. The control unit, when the control unit predicts that a short side of the article will interfere with the posture changing unit in the advancing-retracting position of the first state, may control the advancing-retracting position of the posture changing unit to be the second state. In this case, by not causing the short side of the article to interfere with the posture changing unit in the advancing-retracting position of the first state, the article can be suppressed from rotating such that a long-side direction of the article intersects the conveyance direction at a larger angle.

(3) In (1) or (2) above, a shape of the article may be a rectangular-like shape having a long side and a short side in a plan view. The control unit, when a long-side direction of the article detected by the detection unit is in a posture parallel to a direction along the conveyance direction, may control the advancing-retracting position of the posture changing unit to be the second state. In this case, for example, by not causing the article to interfere with the posture changing unit in the advancing-retracting position of the second state, the posture can be maintained in which the long-side direction of the article is parallel to the direction along the conveyance direction.

(4) In (2) above, the conveyance apparatus may include a removal device configured to remove the article from the conveyance unit. The control unit, when the control unit predicts that the short side of the article will interfere with the posture changing unit in the advancing-retracting position of the second state, may control the removal device to remove the article from the conveyance unit. In this case, by removing the article from the conveyance unit, interference of the short side of the article with the posture changing unit in the advancing-retracting position of the second state can be suppressed, and the article can be suppressed from rotating such that the long-side direction of the article intersects the conveyance direction at a larger angle.

(5) In (1) above, a shape of the article may be a rectangular-like shape having a long side and a short side in a plan view. The posture changing unit may be switchable in the advancing-retracting position to a third state in which the posture changing unit is advanced toward the other side portion of the conveyance unit with an amount of advancement different from an amount of advancement of the first state. The control unit, when the control unit predicts that the short side of the article will interfere with the posture changing unit in the advancing-retracting position of the first state and predicts that the long side of the article will interfere with the posture changing unit in the advancing-retracting position of the third state, may control the advancing-retracting position of the posture changing unit to be the third state. In this case, by causing the long side of the article to interfere with the posture changing unit in the third state, the article can be rotated such that a long-side direction of the article is along the conveyance direction.

(6) In any one of (1) to (5) above, the posture changing unit may include an interference member including a first surface along the conveyance direction and a second surface along a direction orthogonal to the conveyance direction, and an actuator configured to switch a position of the interference member along a direction intersecting the conveyance direction. In this case, by driving the actuator to move the interference member, the advancing-retracting position of the posture changing unit can be controlled.

According to the present disclosure, the posture of the conveyed article can be controlled in a more suitable manner in response to the conveyance state of the article.

### BRIEF DESCRIPTION OF THE DRAWINGS

FIG. 1 is a schematic diagram illustrating an article storage system including a conveyance apparatus according to an example.
FIG. 2 is a diagram illustrating a configuration of the article storage system.
FIG. 3 is a diagram illustrating a configuration of the article storage device.
FIG. 4 is a schematic perspective view illustrating the configuration of the article storage device.
FIG. 5 is a perspective view of the article storage device viewing an input conveyor from an alignment conveyor side.
FIG. 6 is a schematic plan view of the conveyance apparatus according to the example.
FIG. 7A is a diagram illustrating an example of a detection result of a detection unit.
FIG. 7B is a diagram illustrating another example of a detection result of the detection unit.
FIG. 8 is a schematic plan view for explaining a first control example of an advancing-retracting position of a posture changing unit.
FIG. 9 is a schematic plan view for explaining a second control example of the advancing-retracting position of the posture changing unit.
FIG. 10 is a schematic plan view for explaining a third control example of the advancing-retracting position of the posture changing unit.
FIG. 11 is a schematic plan view for explaining a fourth control example of the advancing-retracting position of the posture changing unit.
FIG. 12 is a schematic plan view for explaining a fifth control example of the advancing-retracting position of the posture changing unit.

### DETAILED DESCRIPTION

Hereinafter, examples of the present disclosure will be described in detail with reference to the accompanying drawings. In the description of the drawings, identical or equivalent elements are denoted by the same reference numerals, and redundant descriptions are omitted.

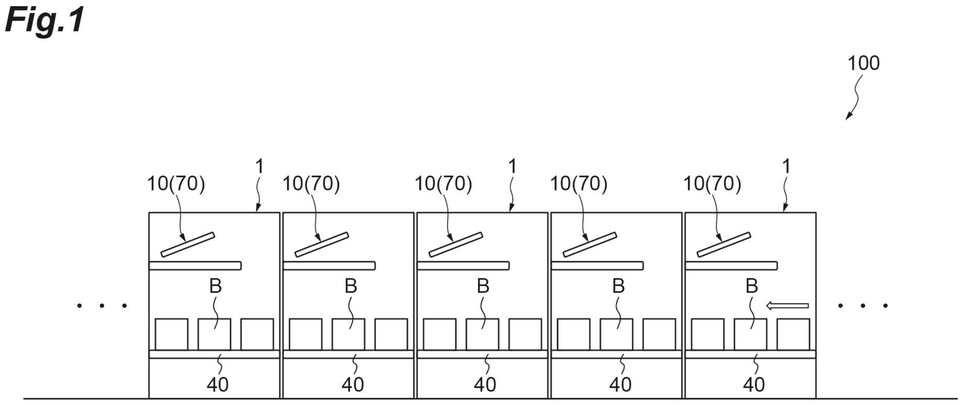

As shown in FIG. 1, an article storage system 100 includes, for example, a plurality of article storage devices 1. The plurality of article storage devices 1 are arranged in a row. In the article storage system 100, for example, each article storage device 1 accommodates different types of articles in a box B. In this example, the article is a bag G in which contents are sealed. The box B is, for example, a cardboard box.

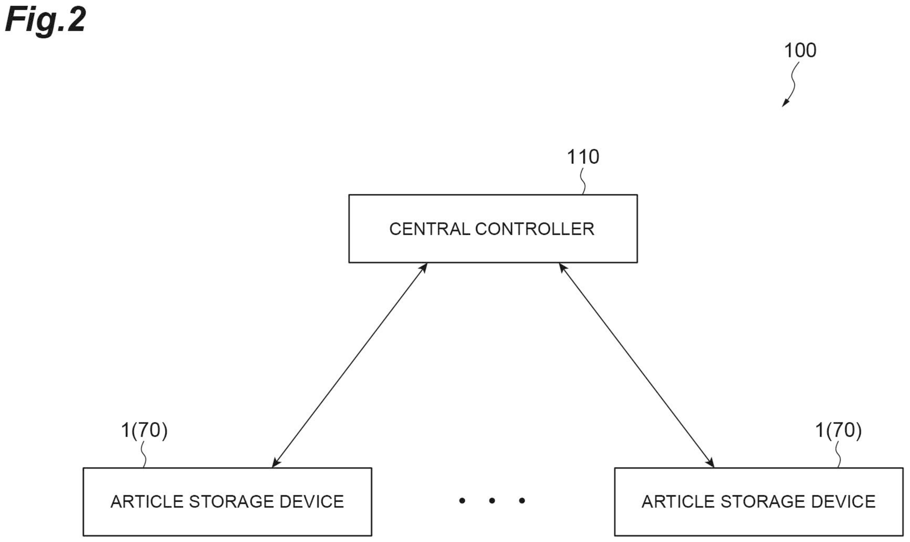

As shown in FIG. 2, the article storage system 100 includes a central controller 110. The central controller 110 controls the entire article storage system 100. The central controller 110 may be configured by a computer including a processor, a main memory, an auxiliary memory, a communication control unit, an input device, and an output device. The central controller 110 may be configured by a single computer or multiple computers. The central controller 110 is, for example, provided to be communicable with the plurality of article storage devices 1 by wire or wirelessly, and generates operation signals to control the operation of the article storage devices 1.

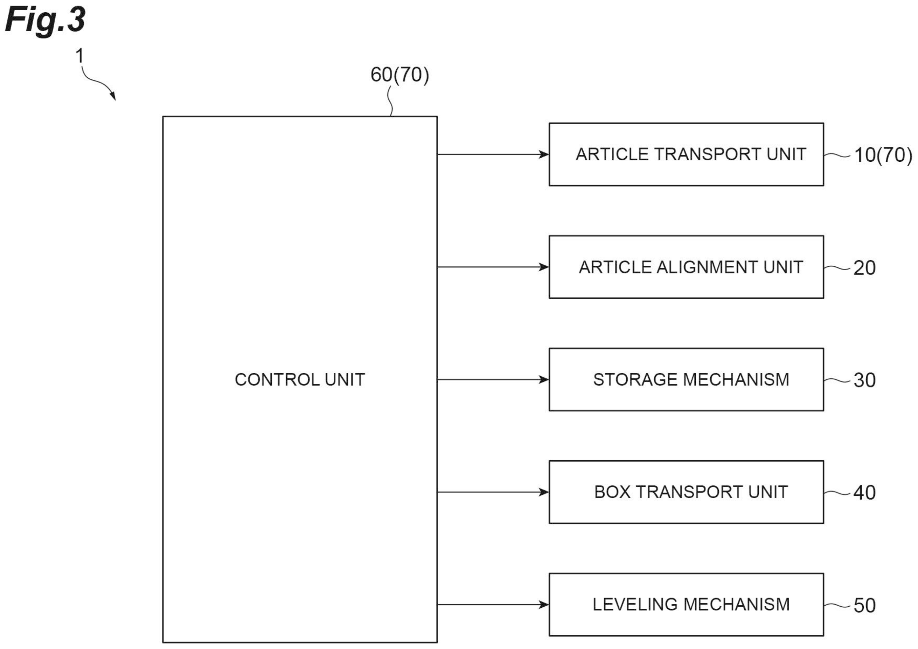

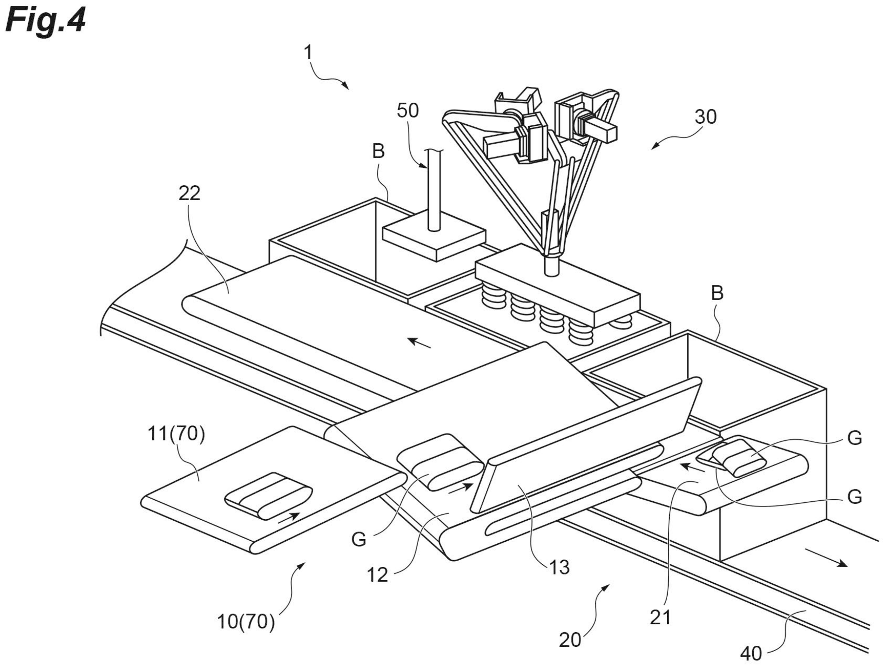

In an upstream process in a conveyance path of the bag G of the article storage device 1, devices such as a weighing device and a bag-making packaging machine (not shown) are arranged. As shown in FIG. 3 and FIG. 4, the article storage device 1 includes an article transport unit 10, an article alignment unit 20, a storage mechanism 30, a box transport unit 40, a leveling mechanism 50, and a control unit 60.

The article transport unit 10 receives the bag G from a device in an upstream process and conveys the bag G to the article alignment unit 20. The article transport unit 10 includes a posture control conveyor 11 and an input conveyor 12. The input conveyor 12 conveys the bag G conveyed from the posture control conveyor 11 to the article alignment unit 20. The posture control conveyor 11 and the control unit 60 form a part of a conveyance apparatus 70 according to the example. Details of the conveyance apparatus 70 will be described later.

A conveyance surface of the input conveyor 12 is inclined with respect to a horizontal plane. At a lower end of the input conveyor 12 in an inclination direction, a support conveyor 13 is provided that supports the bag G to suppress falling off and guides the bag G in the conveyance direction. The bag G moving on an upper side of the conveyance surface of the input conveyor 12 in the inclination direction is subjected to a gravity component along the inclination direction, causing the bag G to slide downward toward the support conveyor 13 while moving, and thereafter move along the support conveyor 13. The conveyance surface of the support conveyor 13 moves along a traveling direction of the conveyance surface of the input conveyor 12.

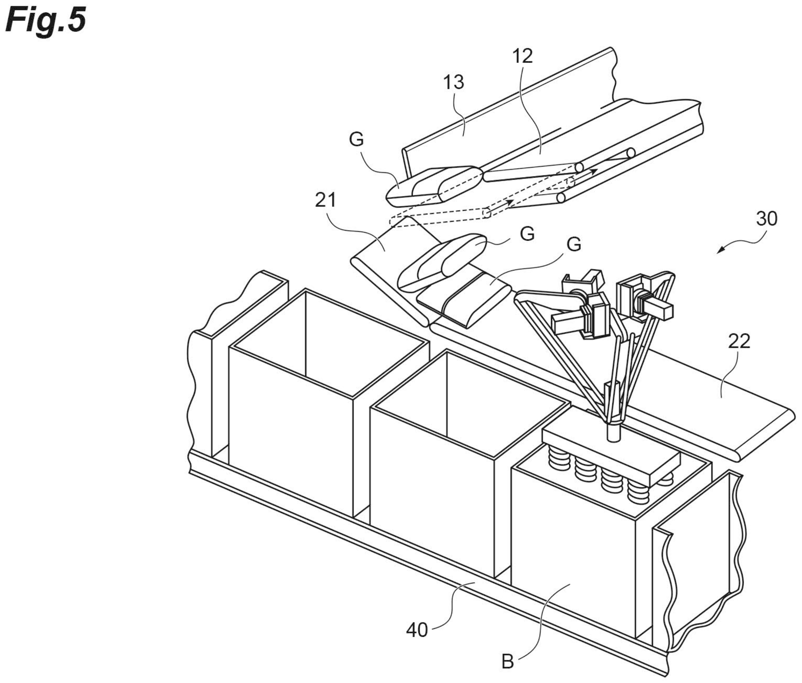

As shown in FIG. 4 and FIG. 5, when the bag G is transported downstream of the input conveyor 12 and a front end of the bag G reaches a front end of the input conveyor 12, the bag G lands on an alignment conveyor 21 in a landing posture that maintains a posture when leaving the input conveyor 12. The article alignment unit 20 aligns the bags G supplied from the article transport unit 10. In the article alignment unit 20, a portion of a subsequently landing bag G lands on the alignment conveyor 21, and a remaining portion leans against a preceding bag G and tilts. In the article alignment unit 20, after a last bag G in a row lands on the alignment conveyor 21, the alignment conveyor 21 and an output conveyor 22 start operating simultaneously, and N bags G aligned in a row are transferred to the output conveyor 22 as one article group, while any article group already on the output conveyor 22 moves further downstream.

The storage mechanism 30 accommodates (transfers) the plurality of bags G aligned in the article alignment unit 20 in the box B. The storage mechanism 30 is a parallel linkage robot with three sets of links.

The box transport unit 40 is a belt conveyor that transports the box B. The box transport unit 40 transports the box B after the bags G are accommodated in the box B by the storage mechanism 30.

The leveling mechanism 50 presses and levels the bags G accommodated in the box B. The leveling mechanism 50 is arranged upstream or downstream of the storage mechanism 30 along the transport direction of the box transport unit 40.

The control unit 60 controls the operation of the article storage device 1. The control unit 60 is a computer or a circuit including a Central Processing Unit (CPU), a Read Only Memory (ROM), a Random Access Memory (RAM), and the like. The ROM stores programs and the like for controlling the article storage device 1. The control unit 60 may be capable of communicating with the central controller 110.

The control unit 60 controls the operations of the article transport unit 10, the article alignment unit 20, the storage mechanism 30, the box transport unit 40, the leveling mechanism 50, and the conveyance apparatus 70. The control unit 60 controls each component (each mechanism) based on production information sent from the central controller 110.

A configuration of the conveyance apparatus 70 will be described in more detail. The conveyance apparatus 70 is a device for controlling the posture of the bag G while conveying the bag G so that the posture of the bag G supplied from an upstream process becomes a predetermined posture in a downstream process.

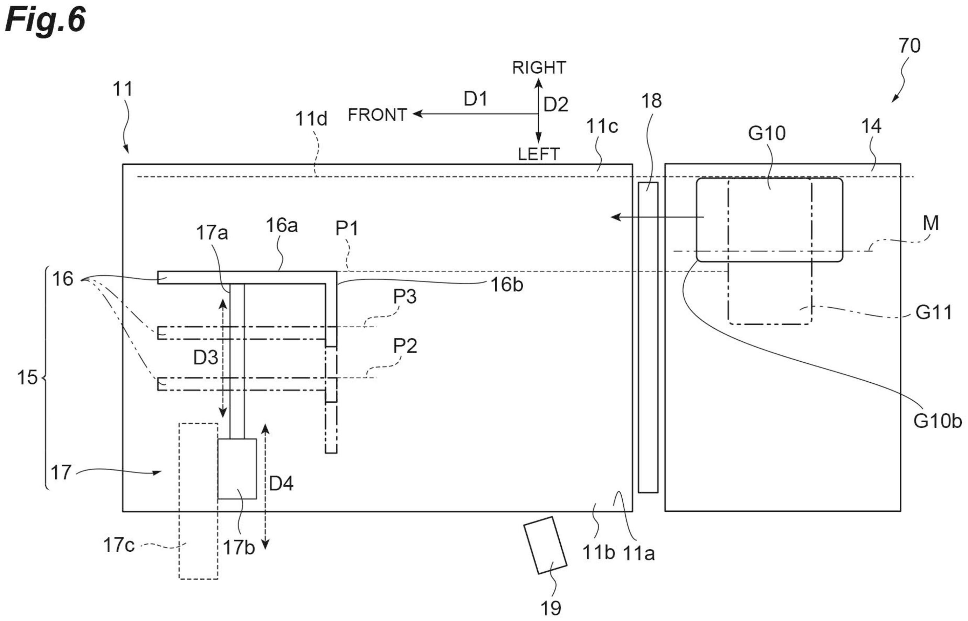

As shown in FIG. 6, as an example, the conveyance apparatus 70 includes a posture control conveyor 11 (conveyance unit), an article introduction conveyor 14, a turner 15 (posture changing unit), a line sensor 18 (detection unit), an air nozzle (removal device) 19, and the control unit 60. The posture control conveyor 11, the article introduction conveyor 14, the turner 15, the line sensor 18, and the air nozzle 19 may be included in the article transport unit 10.

The posture control conveyor 11 is a transport conveyor provided upstream of the input conveyor 12 of the article storage device 1. The posture control conveyor 11 has a belt that travels toward a predetermined conveyance direction D1 and forms a conveyance surface 11a that transports the bag G. The posture control conveyor 11 has a predetermined width in an intersecting direction D2 that intersects (here, is orthogonal to) the conveyance direction D1. The posture control conveyor 11 has one side portion 11b on a left side along the intersecting direction D2 and an other side portion 11c on a right side along the intersecting direction D2, when a direction advancing in the conveyance direction D1 is defined as front. In the following description, the direction advancing in the conveyance direction D1 is referred to as "front", a left side along the intersecting direction D2 is referred to as "left", and a right side along the intersecting direction D2 is referred to as "right".

The article introduction conveyor 14 is a transport conveyor provided upstream of the posture control conveyor 11 in the conveyance direction D1. The article introduction conveyor 14 is connected to the posture control conveyor 11 with a predetermined gap in the conveyance direction D1. The article introduction conveyor 14 has, for example, a width equivalent to the posture control conveyor 11 in the intersecting direction D2. The article introduction conveyor 14 may be arranged such that both ends in the intersecting direction D2 are aligned with both ends of the posture control conveyor 11 in the intersecting direction D2.

The article introduction conveyor 14 receives bags G that have passed inspections for weight, seal integrity, and foreign matter contamination from an upstream process in the conveyance path of the bag G. Upstream of the article introduction conveyor 14, for example, a singulator may be installed (not shown). The singulator is a device that separates a plurality of bags G that have passed inspections for weight, seal integrity, and foreign matter contamination from one another while transporting the bags G, and supplies the bags G to the downstream process one by one at predetermined intervals. A known device can be used as the singulator.

In the posture control conveyor 11 and the article introduction conveyor 14, a conveyance reference line 11d may be set. The conveyance reference line 11d is a virtual straight line that serves as a reference for a position of the bag G supplied from the singulator in the intersecting direction D2. The conveyance reference line 11d is set, for example, to pass through a position with a predetermined margin from the other side portion 11c of the posture control conveyor 11.

In FIG. 6 to FIG. 12, bags G10 to G18 differing in at least one of position or posture are shown as examples of the bag G. A shape of each bag G is, for example, a rectangular-like shape having a long side and a short side in a plan view. By design, ideally, the bag G supplied from the singulator is in a position and posture such that its long-side direction is along the conveyance direction D1 and its right long side overlaps the conveyance reference line 11d, as in the bag G10 in FIG. 6. However, in general, the bag G supplied from the singulator is in a state in which at least one of a position or a posture is different from an ideal state such as the bag G10. By controlling the posture of such a bag G and arranging the bag G such that at least its long-side direction is along the conveyance direction D1 to supply the bag G to the input conveyor 12 of the article storage device 1, accumulation and transfer of the bag G in the article storage device 1 can be stabilized.

The turner 15 is a mechanism configured to change at least one of a position or a posture of the bag G being conveyed. The turner 15 is provided on the one side portion 11b of the posture control conveyor 11. The turner 15 includes, for example, an interference member 16 and an actuator 17.

The interference member 16 is a member for interfering with the bag G being conveyed. The interference member 16 may be, for example, a plate member having an L-shape in a plan view. The interference member 16 includes a first surface 16a along the conveyance direction D1 and a second surface 16b along the intersecting direction D2. A length of the first surface 16a along the conveyance direction D1 and a length of the second surface 16b along the intersecting direction D2 can be set according to dimensions of the posture control conveyor 11, dimensions of the bag G, and a movable range of the interference member 16 described later.

The actuator 17 is a mechanism that switches a position of the interference member 16 along the intersecting direction D2. The actuator 17 includes, for example, an air cylinder 17b provided such that a rod 17a extends and retracts along an extension-retraction direction D3 parallel to the intersecting direction D2. A front end of the rod 17a is attached to the first surface 16a of the interference member 16. The air cylinder 17b is attached to a frame or the like of the article storage device 1 via a servo motor 17c. The servo motor 17c supports the air cylinder 17b so as to be movable along a movement direction D4 parallel to the intersecting direction D2.

In the actuator 17, first, an adjustment of an advancing-retracting position P1 where the first surface 16a of the interference member 16 is located in a state where the rod 17a is extended is performed. Assuming a bag G11 (a two-dot chain line in FIG. 6) in a state where a right short side overlaps the conveyance reference line 11d, the advancing-retracting position P1 is adjusted by moving the air cylinder 17b with the servo motor 17c so that a position along the intersecting direction D2 in the bag G11 is at a position of 1/3 to 1/2 from a left short side of the bag G11.

The control unit 60 controls a position of the turner 15 between a first state in which the turner 15 is advanced toward the other side portion 11c of the posture control conveyor 11 and a second state in which the turner 15 is retracted toward the one side portion 11b from the first state. The control unit 60 controls the position of the turner 15, for example, by extending and retracting the rod 17a of the air cylinder 17b.

After the adjustment of the advancing-retracting position P1 described above, with a position of the servo motor 17c fixed, the control unit 60 extends and retracts the rod 17a of the air cylinder 17b, so that a position of the first surface 16a of the interference member 16 is adjustable to any of, for example, an advancing-retracting position P1, an advancing-retracting position P2, and an advancing-retracting position P3. The advancing-retracting position P1, the advancing-retracting position P2, and the advancing-retracting position P3 correspond to a first state, a second state, and a third state of the turner 15, respectively. As a result, the turner 15 is configured to be switchable in the advancing-retracting position among the first state, the second state, and a third state in which the turner 15 is advanced toward the other side portion 11c of the posture control conveyor 11 with an amount of advancement different from that of the first state.

The line sensor 18 is provided upstream of the turner 15 in the conveyance direction D1 of the bag G, and detects at least one of a position or a posture of the bag G along the intersecting direction D2. The position of the bag G along the intersecting direction D2 is, for example, positions of four corners of the bag G toward a left side in the intersecting direction D2 with reference to the conveyance reference line 11d. The posture of the bag G is a posture of the bag G in a plan view on the posture control conveyor 11 and the article introduction conveyor 14.

The line sensor 18 is, for example, arranged at a position between the posture control conveyor 11 and the article introduction conveyor 14 in the conveyance direction D1, and includes a plurality of light-emitting elements provided above a space through which the bag G on the conveyance surface 11a passes, and a plurality of light-receiving sensors provided below the space, with the space interposed therebetween. The plurality of light-emitting elements and the plurality of light-receiving sensors are arranged at predetermined intervals along the intersecting direction D2. Light is emitted downward from each of the plurality of light-emitting elements above. The emitted light is received by the plurality of light-receiving sensors below.

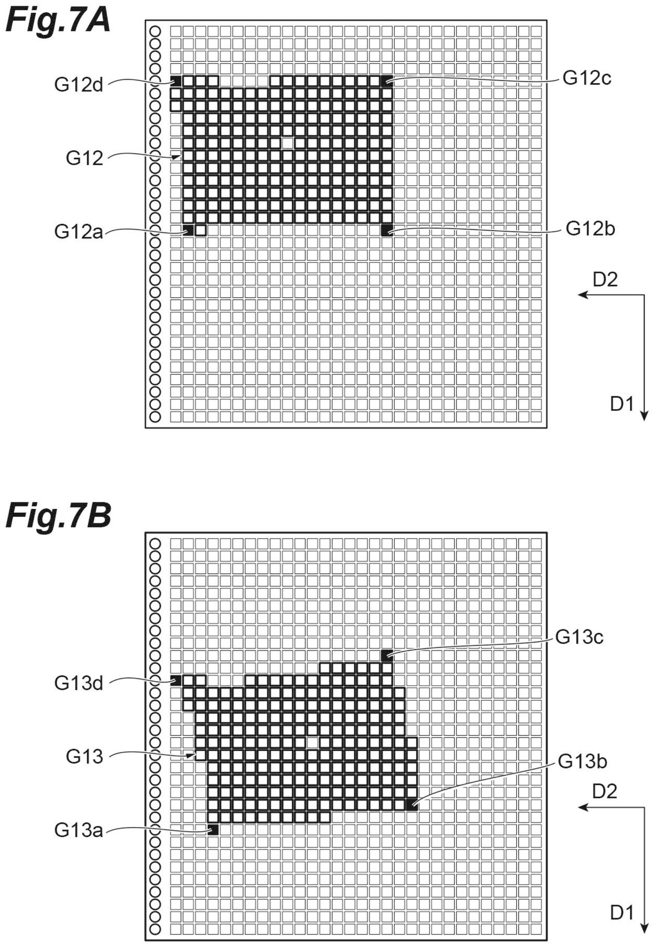

The line sensor 18 calculates at least one of a position or a posture of the bag G along the intersecting direction D2 by a known calculation, based on presence or absence of light blocking of the line sensor 18 by the bag G and a time during which the bag G is passing. For example, as shown in FIG. 7A, in a two-dimensional plane with the conveyance direction D1 and the intersecting direction D2 as axes, coordinates of a right front corner G12a of a bag G12, coordinates of a left front corner G12b of the bag G12, coordinates of a left rear corner Gl2c of the bag G12, and coordinates of a right rear corner G12d of the bag G12 are detected as a position of the bag G12 along the intersecting direction D2.

Similarly, as shown in FIG. 7B, in a two-dimensional plane with the conveyance direction D1 and the intersecting direction D2 as axes, coordinates of a right front corner G13a of a bag G13, coordinates of a left front corner G13b of the bag G13, coordinates of a left rear corner G13c of the bag G13, and coordinates of a right rear corner G13d of the bag G13 are detected as a position of the bag G13 along the intersecting direction D2.

The air nozzle 19 is a removal device that removes the bag G from the posture control conveyor 11. The air nozzle 19 is supplied with, for example, factory air, and the control unit 60 controls whether the air nozzle 19 ejects air. The air nozzle 19 is provided upstream of the turner 15 in the conveyance direction D1 at the one side portion 11b of the posture control conveyor 11. The air nozzle 19 is arranged in an orientation to eject air toward a downstream side in the conveyance direction D1 with respect to the intersecting direction D2. When the air nozzle 19 ejects air toward the bag G on the posture control conveyor 11, the air nozzle 19 blows the bag G toward the other side portion 11c and removes the bag G from the posture control conveyor 11.

The control unit 60 predicts (determines) whether to cause the bag G and the interference member 16 to interfere with each other based on at least one of the position and the posture detected by the line sensor 18, and controls the advancing-retracting position of the interference member 16 according to a result of the determination. In this example, the control unit 60 controls the advancing-retracting position of the interference member 16 so that the posture of the bag G is such that a long-side direction of the bag G is along the conveyance direction D1.

In a case of the bag G10 of FIG. 6 as an example, from coordinates of four corners of the bag G10 detected by the line sensor 18, coordinates of a left front corner G10b of the bag G10 are located on a conveyance reference line 11d side with respect to the advancing-retracting position P1, and the posture of the bag G10 is such that a short side is located at a front of the bag G10 in the conveyance direction D1. In this state, since it is not necessary to change the posture of the bag G10, the bag G10 is conveyed as it is to the end of the posture control conveyor 11.

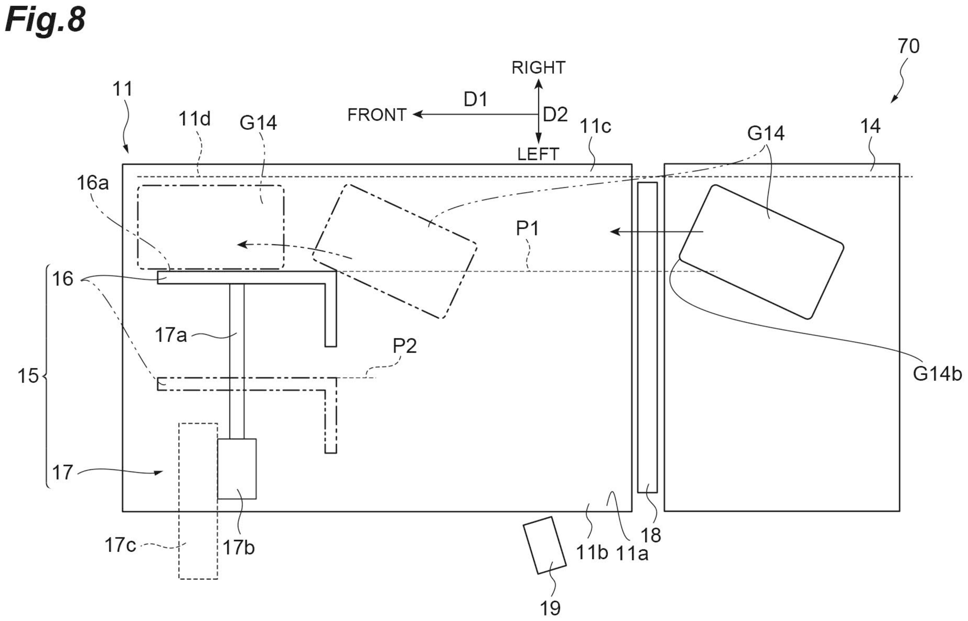

Next, an operation example of the conveyance apparatus 70 will be described with reference to FIG. 8 to FIG. 12.

As shown in FIG. 8, a bag G14 is conveyed from the article introduction conveyor 14 to the posture control conveyor 11 in a state where a long-side direction is inclined at an angle equal to or greater than a predetermined angle with respect to the conveyance direction D1. The predetermined angle is an angle at which an angle formed by the long-side direction with respect to the conveyance direction D1 is inclined to an extent that control is to be performed to control the posture of the bag G. The predetermined angle may be a preset parameter. The predetermined angle may be stored in the control unit 60.

When the bag G14 is conveyed in this state, the line sensor 18 detects a position of the bag G14 and a posture of the bag G14. From coordinates of four corners of the bag G14 detected by the line sensor 18, coordinates of a left front corner G14b located at a front of the bag G14 are located on a conveyance reference line 11d side with respect to the advancing-retracting position P1, and the posture of the bag G14 is inclined rightward with respect to the conveyance direction D1. In this case, the control unit 60, based on the position of the corner G14b located at the front of the bag G14 and the posture of the bag G14 detected by the line sensor 18, predicts that a left long side of the bag G14 will interfere with the interference member 16 in the advancing-retracting position P1 of the first state. When the control unit 60 predicts in this way, the control unit 60 controls the advancing-retracting position of the interference member 16 to be the advancing-retracting position P1 of the first state.

Specifically, the control unit 60 extends the rod 17a of the air cylinder 17b to arrange the first surface 16a of the interference member 16 at the advancing-retracting position P1. As a result, the long side on the left side of the bag G14 contacts a corner between the first surface 16a and the second surface 16b of the interference member 16, the bag G14 rotates in a plane about the corner between the first surface 16a and the second surface 16b as a rotation center, and a posture of the bag G14 is corrected such that an angle formed by the long-side direction with respect to the conveyance direction D1 is reduced. The bag G14 is arranged in a posture substantially parallel to the conveyance direction D1 (parallel to a direction along the conveyance direction D1) by the interference member 16 of the turner 15, and is transported to the terminal end of the posture control conveyor 11.

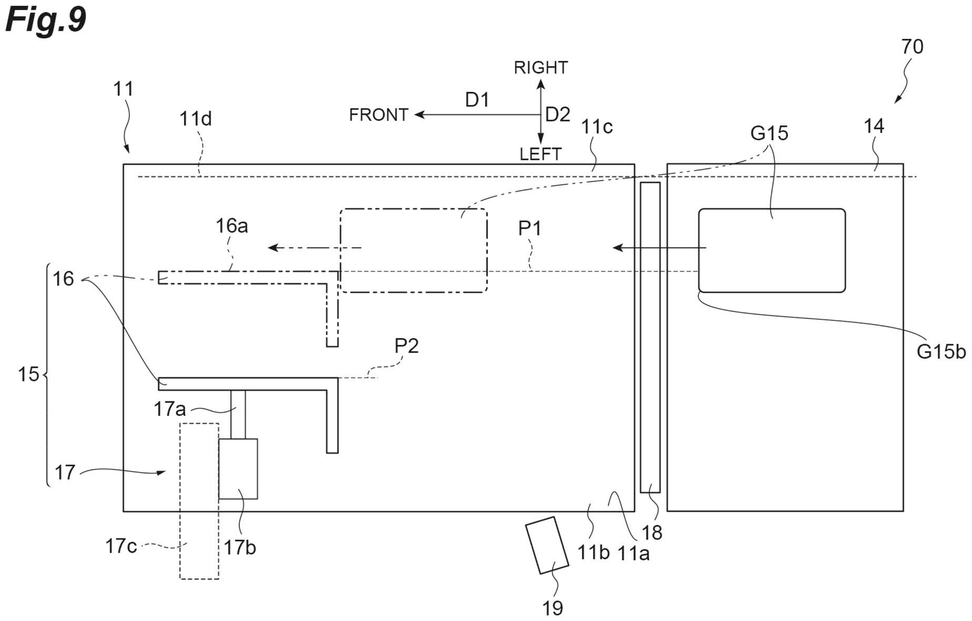

As shown in FIG. 9, a bag G15 is transported from the article introduction conveyor 14 to the posture control conveyor 11 in a state in which its long-side direction is substantially parallel to the conveyance direction D1 and the bag G15 is separated from the conveyance reference line 11d by more than a predetermined distance. The predetermined distance is a distance such that coordinates of a left front corner G15b of the bag G15 are located on an opposite side to the conveyance reference line 11d relative to the advancing-retracting position P1.

When the bag G15 is transported in this state, the line sensor 18 detects a position and a posture of the bag G15. From coordinates of four corners of the bag G15 detected by the line sensor 18, coordinates of a left front corner G15b located at a front of the bag G15 are located on an opposite side to the conveyance reference line 11d relative to the advancing-retracting position P1. In this case, the control unit 60 predicts that a short side on a front side of the bag G15 will interfere with the interference member 16 in the advancing-retracting position P1 of the first state, based on a position of the corner G15b of the bag G15 detected by the line sensor 18. When the control unit 60 predicts in this way, the control unit 60 controls the advancing-retracting position of the interference member 16 to be the advancing-retracting position P2 of the second state.

Specifically, the control unit 60 retracts the rod 17a of the air cylinder 17b to arrange the first surface 16a of the interference member 16 at the advancing-retracting position P2. As a result, the short side on the front side of the bag G15 does not contact a corner between the first surface 16a and the second surface 16b of the interference member 16, and the bag G15 is transported to the terminal end of the posture control conveyor 11 while maintaining a posture in which the long-side direction is substantially parallel to the conveyance direction D1.

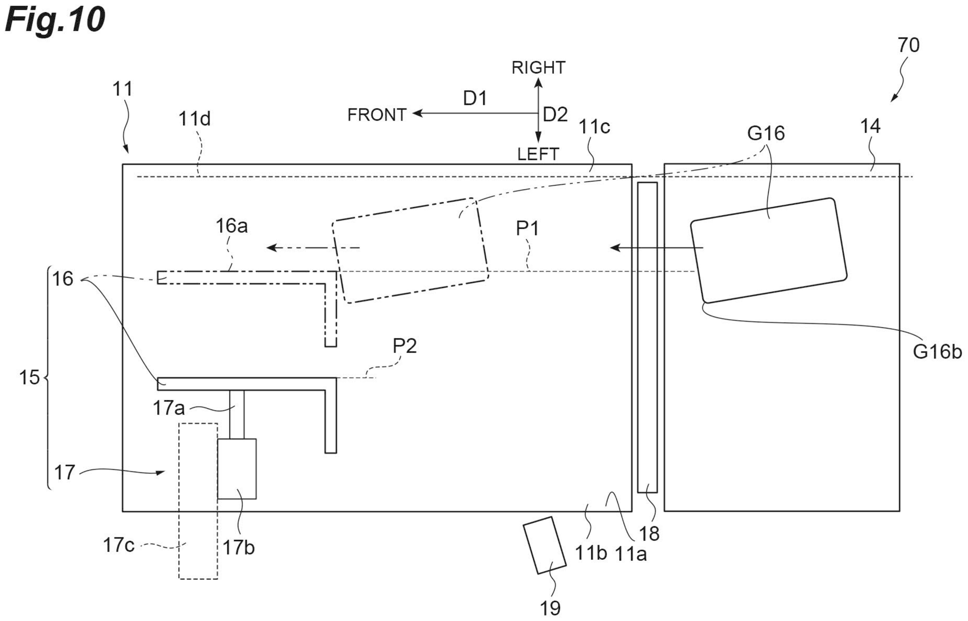

As shown in FIG. 10, a bag G16 is transported from the article introduction conveyor 14 to the posture control conveyor 11 in a posture in which a long-side direction is inclined at an angle less than the predetermined angle with respect to the conveyance direction D1. The posture inclined at an angle less than the predetermined angle is a posture with an angle of inclination to an extent that controlling the posture of the bag G can be omitted.

When the bag G16 is transported in this state, the line sensor 18 detects a position and a posture of the bag G16. From coordinates of four corners of the bag G16 detected by the line sensor 18, coordinates of a left front corner G16b of the bag G16 are located on an opposite side to the conveyance reference line 11d relative to the advancing-retracting position P1. In this case, the control unit 60 predicts that a short side on a front side of the bag G16 will interfere with the interference member 16 in the advancing-retracting position P1 of the first state, based on a position of the corner G16b of the bag G16 and a posture of the bag G16 detected by the line sensor 18. When the control unit 60 predicts in this way, the control unit 60 controls the advancing-retracting position of the interference member 16 to be the advancing-retracting position P2 of the second state.

Specifically, the control unit 60 retracts the rod 17a of the air cylinder 17b to arrange the first surface 16a of the interference member 16 at the advancing-retracting position P2. As a result, the short side on the front side of the bag G16 does not contact a corner between the first surface 16a and the second surface 16b of the interference member 16, and the bag G16 is transported to the terminal end of the posture control conveyor 11 while maintaining a posture in which the long-side direction is inclined at an angle less than the predetermined angle. Even if the posture remains in which the long-side direction is inclined at an angle less than the predetermined angle, the long-side direction is aligned along the support conveyor 13 by the inclined input conveyor 12 and the support conveyor 13 on the downstream side.

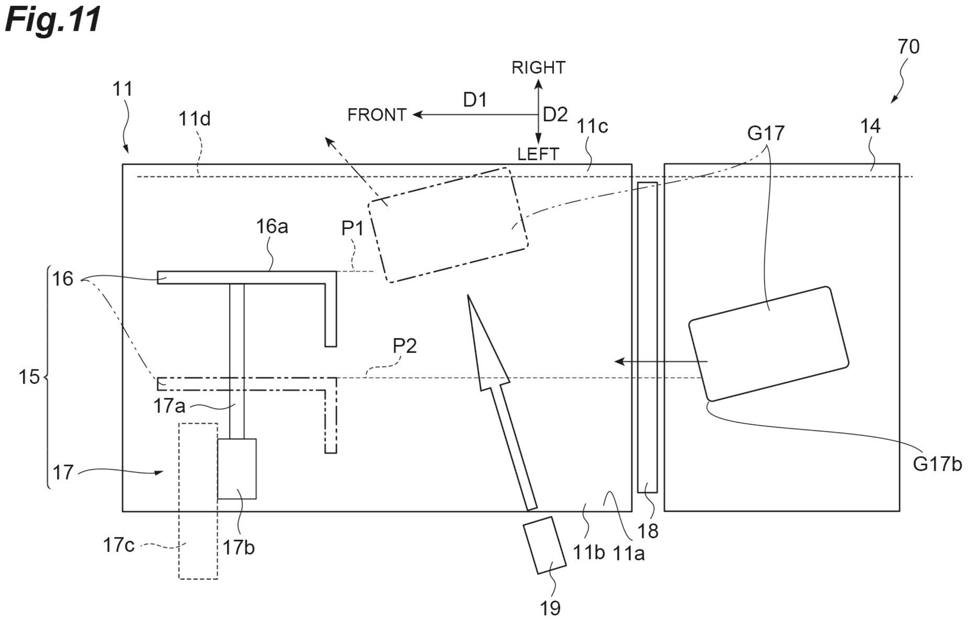

As shown in FIG. 11, a bag G17 is transported from the article introduction conveyor 14 to the posture control conveyor 11 in a state in which a long-side direction is inclined at an angle equal to or greater than the predetermined angle with respect to the conveyance direction D1 and the bag G17 is separated from the conveyance reference line 11d by more than a predetermined distance.

When the bag G17 is transported in this state, the line sensor 18 detects a position and a posture of the bag G17. From coordinates of four corners of the bag G17 detected by the line sensor 18, coordinates of a left front corner G17b of the bag G17 are located on an opposite side to the conveyance reference line 11d relative to not only the advancing-retracting position P1 but also the advancing-retracting position P2. In this case, the control unit 60 predicts that a short side on a front side of the bag G17 will interfere with the interference member 16 in the advancing-retracting position P2 of the second state, based on a position of the corner G17b of the bag G17 and a posture of the bag G17 detected by the line sensor 18. In this case, if the bag G17 is transported as it is, the bag G17 will interfere with the interference member 16 in the advancing-retracting position P2 of the second state that is retracted to a maximum extent toward the one side portion 11b side, and a long-side direction of the bag G17 rotated in a plane due to the interference may intersect the conveyance direction D1 at a larger angle.

Therefore, when the control unit 60 predicts in this way, the control unit 60 controls the air nozzle 19 to remove the bag G17 from the posture control conveyor 11. Specifically, the control unit 60 ejects air from the air nozzle 19 toward the bag G17 being transported, thereby blowing the bag G17 toward the other side portion 11c of the posture control conveyor 11 and removing the bag G17 from the posture control conveyor 11. In this way, the bag G17 can be suppressed from interfering with the interference member 16.

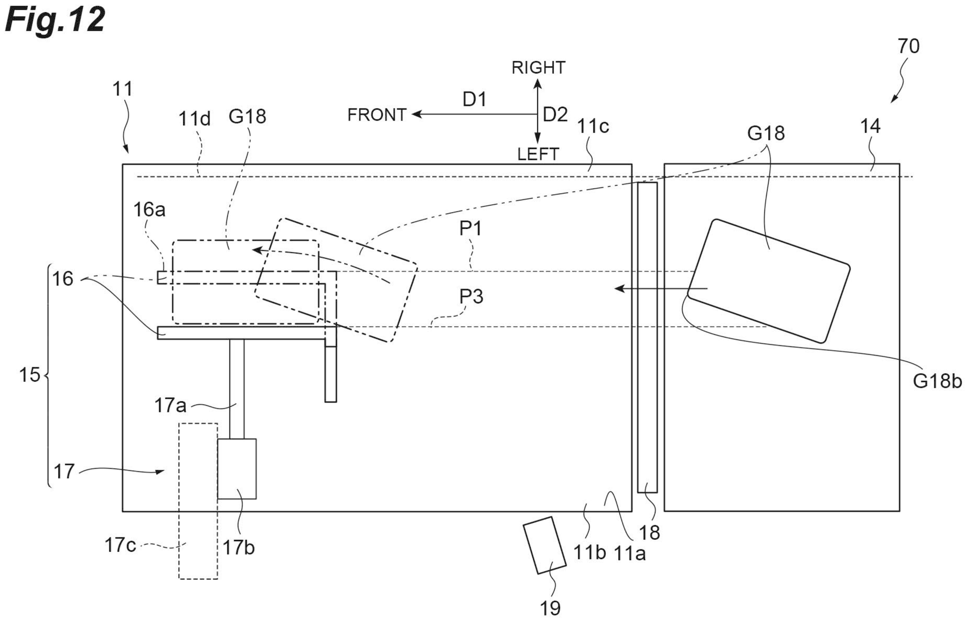

As shown in FIG. 12, a bag G18 is transported from the article introduction conveyor 14 to the posture control conveyor 11 in a posture in which a long-side direction is inclined rightward with respect to the conveyance direction D1 at an angle equal to or greater than the predetermined angle with respect to the conveyance direction D1, and in a state separated from the conveyance reference line 11d by more than a predetermined distance (a state more separated than in FIG. 10 but not more separated than in FIG. 11).

When the bag G18 is transported in this state, the line sensor 18 detects a position and a posture of the bag G18. From coordinates of four corners of the bag G18 detected by the line sensor 18, coordinates of a left front corner G18b located at a front of the bag G18 are located on an opposite side to the conveyance reference line 11d relative to the advancing-retracting position P1, and are located on a conveyance reference line 11d side relative to the advancing-retracting position P3. In this case, the control unit 60 predicts that a short side on a front side of the bag G18 will interfere with the interference member 16 in the advancing-retracting position P1 of the first state, and predicts that a long side on a left side of the bag G18 will interfere with the interference member 16 in the advancing-retracting position P3 of the third state, based on a position of the corner G18b located at the front of the bag G18 and a posture of the bag G18 detected by the line sensor 18. When the control unit 60 predicts in this way, the control unit 60 controls the advancing-retracting position of the interference member 16 to be the advancing-retracting position P3 of the third state.

Specifically, the control unit 60 extends or retracts the rod 17a of the air cylinder 17b to arrange the first surface 16a of the interference member 16 at the advancing-retracting position P3. As a result, the long side on the left side of the bag G18 contacts a corner between the first surface 16a and the second surface 16b of the interference member 16, the bag G18 rotates in a plane with the corner between the first surface 16a and the second surface 16b as a rotation center, and a posture of the bag G18 is corrected such that an angle formed by the long-side direction with respect to the conveyance direction D1 is reduced. The bag G18 is arranged in a posture substantially parallel to the conveyance direction D1 by the interference member 16 of the turner 15, and is transported to the terminal end of the posture control conveyor 11.

As described above, in the conveyance apparatus 70, the line sensor 18 detects at least one of a position or a posture of the bag G along the intersecting direction D2 that intersects the conveyance direction D1. Based on at least one of the position or the posture detected by the line sensor 18, the control unit 60 determines whether to cause the bag G and the interference member 16 to interfere with each other, and controls the advancing-retracting position of the interference member 16 in response to the result of the determination. In this way, the advancing-retracting position of the interference member 16 is controlled by considering at least one of the position or the posture of the bag G along the intersecting direction D2 as the conveyance state of the bag G. Thus, the control unit 60 can control the advancing-retracting position of the interference member 16 in a more suitable manner in response to the conveyance state of the bag G, as compared to, for example, a configuration that does not consider the position and posture of the bag G. Therefore, according to the conveyance apparatus 70, the posture of the conveyed bag G can be controlled in a more suitable manner in response to the conveyance state of the bag G.

In the conveyance apparatus 70, a shape of the bag G is a rectangular-like shape having a long side and a short side in a plan view, and the control unit 60, when the control unit 60 predicts that a short side of the bag G will interfere with the interference member 16 in the advancing-retracting position P1 of the first state, controls the advancing-retracting position of the interference member 16 to be the advancing-retracting position P2 of the second state. As a result, by not causing the short side of the bag G to interfere with the interference member 16 in the advancing-retracting position P1 of the first state, the bag G can be suppressed from rotating such that a long-side direction of the bag G intersects the conveyance direction D1 at a larger angle.

In the conveyance apparatus 70, a shape of the bag G is a rectangular-like shape having a long side and a short side in a plan view, and the control unit 60, when a long-side direction of the bag G detected by the line sensor 18 is in a posture substantially parallel to the conveyance direction D1, controls the advancing-retracting position of the interference member 16 to be the advancing-retracting position P2 of the second state. As a result, for example, by not causing the bag G to interfere with the interference member 16 in the advancing-retracting position P2 of the second state, the posture can be maintained in which the long-side direction of the bag G is substantially parallel to the conveyance direction D1.

The conveyance apparatus 70 includes the air nozzle 19 that removes the bag G from the posture control conveyor 11. The control unit 60, when the control unit 60 predicts that the short side of the bag G will interfere with the interference member 16 in the advancing-retracting position P2 of the second state, controls the air nozzle 19 to remove the bag G from the posture control conveyor 11. As a result, by removing the bag G from the posture control conveyor 11, interference of the short side of the bag G with the interference member 16 in the advancing-retracting position P2 of the second state can be suppressed, and the bag G can be suppressed from rotating such that the long-side direction of the bag G intersects the conveyance direction D1 at a larger angle.

In the conveyance apparatus 70, a shape of the bag G is a rectangular-like shape having a long side and a short side in a plan view. The interference member 16 is switchable in the advancing-retracting position to the advancing-retracting position P3 of the third state in which the interference member 16 is advanced toward the other side portion 11c of the posture control conveyor 11 with an amount of advancement different from the amount of advancement of the advancing-retracting position P1 of the first state. The control unit 60, when the control unit 60 predicts that the short side of the bag G will interfere with the interference member 16 in the advancing-retracting position P1 of the first state and predicts that the long side of the bag G will interfere with the interference member 16 in the advancing-retracting position P3 of the third state, controls the advancing-retracting position of the interference member 16 to be the advancing-retracting position P3 of the third state. As a result, by causing the long side of the bag G to interfere with the interference member 16 in the advancing-retracting position P3 of the third state, the bag G can be rotated such that a long-side direction of the bag G is along the conveyance direction D1.

In the conveyance apparatus 70, the turner 15 includes the interference member 16 including the first surface 16a along the conveyance direction D1 and the second surface 16b along the intersecting direction D2, and the actuator 17 that switches a position of the interference member 16 along the intersecting direction D2. As a result, by driving the actuator 17 to move the interference member 16, the advancing-retracting position of the interference member 16 can be controlled.

Although the examples of the present disclosure have been described above, the present disclosure is not limited to the above-described examples, and various modifications can be made without departing from the gist of the present disclosure.

In the above example, the articles were described as bags G as an example, but the present disclosure is not limited to this example. The articles may be of different shapes or types as long as the articles are of a type that tends to require the posture to be changed by rotation in a plane on the posture control conveyor 11.

In the above example, the conveyance apparatus 70 was described as a part of the article storage device 1, but the present disclosure is not limited to this example. The conveyance apparatus 70 may be used in combination with other devices.

In the above example, the first surface 16a of the interference member 16 was controllable to three advancing-retracting positions, for example, the advancing-retracting position P1, the advancing-retracting position P2, and the advancing-retracting position P3, but the present disclosure is not limited to this example. For example, the advancing-retracting position P3 may be omitted, and the first surface 16a may be controllable to two advancing-retracting positions, the advancing-retracting position P1 and the advancing-retracting position P2. Alternatively, the first surface 16a may be controllable to four or more advancing-retracting positions.

In the above example, the line sensor 18 detects at least one of the position or the posture of the bag G along the intersecting direction D2 that intersects the conveyance direction D1, but the present disclosure is not limited to this example. For example, the control unit 60 may have a calculation function as the detection unit. In this case, a signal indicating presence or absence of light blocking at the line sensor 18 may be transmitted to the control unit 60, and the control unit 60 may calculate at least one of the position or the posture of the bag G. The detection unit is not limited to the line sensor 18, and other sensors may be used.

In the above example, the turner 15 was illustrated as the posture changing unit, but the present disclosure is not limited to this example. An interference member having a curved shape or a rod-like shape that is not L-shaped in a plan view may be used, or an actuator other than the air cylinder 17b may be used. The present disclosure is not limited to an example of switching the advancing-retracting position between the first state and the second state by reciprocating motion, and the switching may be in a form such as rotational motion.

In the above example, in the examples of the bags G10 to G18, the control unit 60 predicted whether to cause the bags G10 to G18 and the interference member 16 to interfere with each other according to a relative relationship among a short side and a long side of a rectangle, a left front corner of the rectangle, and the interference member 16, but the present disclosure is not limited to this example. A condition for the prediction (determination) may be changed according to a shape of the article in a plan view, a shape of the posture changing unit, and the like. The control unit determines whether to cause the article and the posture changing unit to interfere with each other based on at least one of the position and the posture detected by the detection unit, and controls a position of the posture changing unit according to a result of the determination. At least a part of the examples and modifications described above may be arbitrarily combined.

## Claims

1. A conveyance apparatus comprising:
a conveyance unit having a conveyance surface configured to convey an article;
a posture changing unit provided on one side portion of the conveyance unit, configured to be switchable in advancing-retracting positions of the posture changing unit between a first state in which the posture changing unit is advanced toward an other side portion of the conveyance unit and a second state in which the posture changing unit is retracted toward the one side portion from the first state, and configured to change at least one of a position or a posture of the article being conveyed by interference with the article;
a detection unit provided upstream of the posture changing unit in a conveyance direction of the article, and configured to detect at least one of a position or a posture of the article along a direction intersecting the conveyance direction; and
a control unit configured to control the advancing-retracting position of the posture changing unit between the first state and the second state,
wherein the control unit determines whether to cause the article and the posture changing unit to interfere with each other based on at least one of the position and the posture detected by the detection unit, and controls the advancing-retracting position of the posture changing unit according to a result of the determination.

2. The conveyance apparatus according to claim 1,
wherein a shape of the article is a rectangular-like shape having a long side and a short side in a plan view, and
wherein the control unit, when the control unit predicts that a short side of the article will interfere with the posture changing unit in the advancing-retracting position of the first state, controls the advancing-retracting position of the posture changing unit to be the second state.

3. The conveyance apparatus according to claim 1 or 2,
wherein a shape of the article is a rectangular-like shape having a long side and a short side in a plan view, and
wherein the control unit, when a long-side direction of the article detected by the detection unit is in a posture parallel to a direction along the conveyance direction, controls the advancing-retracting position of the posture changing unit to be the second state.

4. The conveyance apparatus according to claim 2, further comprising:
a removal device configured to remove the article from the conveyance unit,
wherein the control unit, when the control unit predicts that the short side of the article will interfere with the posture changing unit in the advancing-retracting position of the second state, controls the removal device to remove the article from the conveyance unit.

5. The conveyance apparatus according to claim 1,
wherein a shape of the article is a rectangular-like shape having a long side and a short side in a plan view,
wherein the posture changing unit is switchable in the advancing-retracting position to a third state in which the posture changing unit is advanced toward the other side portion of the conveyance unit with an amount of advancement different from an amount of advancement of the first state, and
wherein the control unit, when the control unit predicts that the short side of the article will interfere with the posture changing unit in the advancing-retracting position of the first state and predicts that the long side of the article will interfere with the posture changing unit in the advancing-retracting position of the third state, controls the advancing-retracting position of the posture changing unit to be the third state.

6. The conveyance apparatus according to any one of claims 1 to 5,
wherein the posture changing unit includes
an interference member including a first surface along the conveyance direction and a second surface along a direction orthogonal to the conveyance direction; and
an actuator configured to switch a position of the interference member along a direction intersecting the conveyance direction.
